(19) Europäisches Patentamt
European Patent Office
Office européen des brevets

(11) **EP 2 622 845 B1**

(12) **FASCICULE DE BREVET EUROPEEN**

(45) Date de publication et mention
de la délivrance du brevet:
**27.04.2016 Bulletin 2016/17**

(21) Numéro de dépôt: **11761640.9**

(22) Date de dépôt: **28.09.2011**

(51) Int Cl.:
*H04N 5/365* (2011.01)          *H04N 5/3745* (2011.01)

(86) Numéro de dépôt international:
**PCT/EP2011/066937**

(87) Numéro de publication internationale:
**WO 2012/041935 (05.04.2012 Gazette 2012/14)**

(54) **DISPOSITIF D'IMAGERIE À CHUTE OHMIQUE NULLE DANS UN CONDUCTEUR DE DONNÉE**

BILDGEBUNGSVORRICHTUNG MIT OHMSCHEM SPANNUNGSABFALL VON NULL BEI EINEM DATENLEITER

IMAGING DEVICE WITH ZERO OHMIC DROP IN A DATA CONDUCTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2010 FR 1057848**

(43) Date de publication de la demande:
**07.08.2013 Bulletin 2013/32**

(73) Titulaires:
• **Commissariat à l'Énergie Atomique et aux Énergies Alternatives
75015 Paris (FR)**
• **Trixell S.A.S.
38430 Moirans (FR)**

(72) Inventeurs:
• **ARQUES, Marc
38100 Grenoble (FR)**
• **MARTIN, Jean-Luc
38620 Saint Geoire En Valdaine (FR)**
• **PEIZERAT, Arnaud
38000 Grenoble (FR)**

(74) Mandataire: **Collet, Alain et al
Marks & Clerk France
Conseils en Propriété Industrielle
Immeuble Visium
22, Avenue Aristide Briand
94117 Arcueil Cedex (FR)**

(56) Documents cités:
**EP-A1- 1 416 722          WO-A1-2009/043887
US-A1- 2009 079 856**

**EP 2 622 845 B1**

**Description**

L'invention concerne un dispositif d'imagerie. L'invention peut être mise en oeuvre pour la prise d'image dans un détecteur.

Ce type de dispositif comprend un grand nombre de points photosensibles appelés pixels généralement organisés en matrice ou en barrette. Dans un détecteur, un pixel représente l'élément sensible élémentaire du détecteur. Chaque pixel convertit le rayonnement électromagnétique auquel il est soumis en un signal électrique. Les signaux électriques issus des différents pixels sont collectés lors d'une phase de lecture de la matrice puis numérisés de manière à pouvoir être traités et stockés pour former une image. Les pixels sont formés d'une zone photosensible délivrant un courant de charges électriques en fonction du flux de photons quelle reçoit, et d'un circuit électronique de traitement de ce courant. La zone photosensible comprend généralement un élément photosensible, ou photodétecteur, qui peut par exemple être une photodiode, une photorésistance ou un phototransistor. On trouve des matrices photosensibles de grandes dimensions qui peuvent posséder plusieurs millions de pixels.

Le détecteur de rayonnement peut être utilisé pour l'imagerie de rayonnements ionisants, et notamment les rayonnements X ou y, dans le domaine médical ou celui du contrôle non destructif dans le domaine industriel, pour la détection d'images radiologiques. Les éléments photosensibles permettent de détecter un rayonnement électromagnétique visible ou proche du visible. Ces éléments ne sont pas, ou peu, sensibles au rayonnement incident au détecteur. On utilise alors fréquemment un convertisseur de rayonnement appelé scintillateur qui convertit le rayonnement incident, par exemple un rayonnement X, en un rayonnement dans une bande de longueurs d'onde auxquelles sont sensibles les éléments photosensibles présents dans les pixels. Une alternative consiste à réaliser l'élément photosensible dans un autre matériau réalisant la conversion directe du rayonnement X en charges électriques. C'est le cas par exemple des matrices dans lesquelles un premier substrat pixellisé en Tellurure de Cadmium (CdTe) est connecté pixel par pixel à un circuit de lecture CMOS qui ne possède donc plus la fonction de détection.

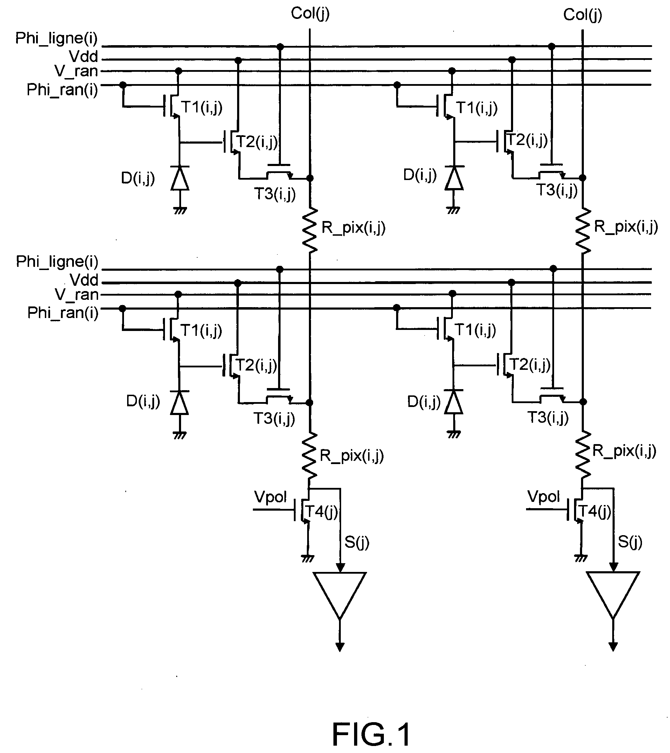

Il est connu de réaliser un circuit électronique de traitement au moyen d'un suiveur de tension permettant de lire le courant de charges accumulées dans l'élément photosensible. Une source de courant assure l'alimentation du pixel pendant sa lecture. Un exemple de dispositif d'imagerie ainsi réalisé est représenté sur la figure 1.

Cette figure présente schématiquement une matrice de deux lignes et deux colonnes pour simplifier la compréhension. Quatre pixels sont formés, chacun à l'intersection d'une ligne et d'une colonne. Il est bien entendu que les matrices réelles sont généralement beaucoup plus grandes.

Chaque pixel comprend une zone photosensible représenté ici par une photodiode D et un circuit électronique de traitement formé de trois transistors T1, T2 et T3. Sur la figure, les repères de la photodiode D et des trois transistors sont suivi de deux coordonnées (i,j) pouvant prendre le rang de la ligne pour i et le rang de la colonne pour j.

Les pixels d'une même colonne ou plus généralement d'une même rangée partagent un transistor T4 et un circuit de lecture S situés en extrémité de colonne. Le transistor T4 et le circuit de lecture S sont reliés aux pixels de la colonne au moyen d'un conducteur Col. Les pixels d'une même ligne sont raccordés à quatre conducteurs véhiculant des signaux Phi_ligne, Vdd, V_ran et Phi_ran permettant de commander chacune des lignes de pixels.

Le transistor T1 permet de réinitialiser la tension de la cathode de la photodiode, à la tension V_ran, lors d'une phase de réinitialisation de la matrice pendant laquelle le signal de commande Phi_ran est actif.

Après la réinitialisation, l'éclairement reçu par la photodiode D fait décroître le potentiel de sa cathode durant une phase de prise d'image.

Cette phase de prise d'image est suivie d'une phase de lecture pendant laquelle, on lit le potentiel de la photodiode D. Pour ce faire, on rend passant le transistor T3, qui a donc un rôle d'interrupteur, grâce à la commande Phi_ligne appliquée à sa grille.

Le transistor T2 fonctionne en suiveur, et le transistor T4 fonctionne en source de courant. Les transistors T2 et T4 forment alors un étage suiveur de tension qui recopie la tension présente sur la cathode de la photodiode D, et la reproduit, à un décalage près, sur l'entrée du circuit de lecture S en extrémité de colonne. Pour réaliser sa recopie, le transistor T2 nécessite un courant de polarisation circulant dans son drain et sa source. Ce courant est imposé par un générateur de courant formé par un transistor T4 commun à plusieurs pixels. Dans l'exemple représenté, le transistor T4 est commun à une colonne de pixels.

La tension Vs présente à l'entrée du circuit de lecture S peut s'exprimer :

$$Vs = Vp - V_T - K \qquad (1)$$

Où Vp est la tension de la cathode de la photodiode, $V_T$ est la tension seuil du transistor T2, et K est une constante liée entre autres à la valeur du courant délivré par le transistor T4.

Les tensions V_ran et Vdd sont souvent identiques.

La phase Phi_ligne d'une ligne n d'une matrice est souvent la même que la phase Phi_ran de la ligne précédente n-1. Dans ce cas la période d'intégration du signal en amont du suiveur dure, pour la ligne n-1, depuis la fin de l'adressage de la ligne n, jusqu'à l'adressage de la ligne n-1 à l'image suivante. Les phases de réinitialisation et de lecture sont donc différentes pour chaque ligne. On parle d'adressage circulaire des lignes bien connu dans la littérature anglo-saxonne sous le nom de « rolling shutter ».

Les circuits d'adressage (généralement des registres à décalage) générant les signaux de commande Phi_ligne et Phi_ran ne sont pas représentés sur la figure et sont disposés en extrémité de ligne.

Les différentes sorties des circuits de lecture S des différentes colonnes sont ensuite multiplexées dans un registre, non représenté sur la figure, de façon à obtenir un signal vidéo d'une ligne.

Il est aussi possible de n'utiliser qu'un seul transistor T4 source de courant, pour toute la matrice, à condition de le commuter successivement sur les différentes colonnes, au fur et à mesure de la lecture de ces mêmes colonnes.

Dans la pratique, chaque colonne Col présente une résistance linéique représentée sous forme d'une résistance R_pix pour chaque pixel. La relation (1) n'est correcte qu'au niveau du noeud de sortie du pixel, c'est-à-dire au niveau de la source du transistor T2. Mais lorsque cette tension se retrouve en extrémité des colonnes, sur l'entrée du circuit de lecture S, elle est entachée d'un décalage ohmique lié à la résistance du transistor T3 et au nombre n de pixels séparant le pixel sélectionné du circuit de lecture S le long de la colonne Col. Le nombre n correspond au rang du pixel lu dans la matrice. Plus précisément, la tension Vs s'exprime :

$$Vs = Vp - V_T - K - I \times (R(T3) + n \times R\_pix) \qquad (2)$$

Le décalage ohmique est gênant car il dépend du rang des pixels lus et il introduit donc un biais variable dans la lecture des tensions Vp des photodiodes.

Une solution consiste à diminuer la valeur de résistance linéique R_pix des colonnes Col en augmentant la largeur de pistes formant les conducteurs de colonnes Col. Cette solution présente néanmoins plusieurs inconvénients.

L'augmentation de largeur des pistes utilise de la surface du substrat sur lequel la matrice est réalisée, et donc réduit la surface utile dans chaque pixel pour la photo détection.

L'augmentation la largeur des pistes augmente aussi leur capacité électrique. Or la tension des colonnes change à l'adressage de chaque nouvelle ligne, puisqu'elle représente à chaque ligne l'éclairement des pixels correspondants. Augmenter la capacité électrique de la colonne oblige donc à amener (ou à extraire) davantage de charges à chaque changement de ligne. Cette augmentation du courant augmente la chute ohmique, ce qui réduit l'effet initialement recherché. En final, cela se traduit par une augmentation de la consommation, ou par une limitation de la vitesse de lecture.

La structure d'un tel pixel à trois transistors trouve donc une limite pour les matrices de grandes dimensions dans lesquelles les capacités colonnes et les résistances colonnes sont importantes. Ces matrices ne peuvent pas être lues rapidement.

Une autre solution consiste à remplacer les sources de courant, communes à une colonne, par des sources de courant disposées dans chaque pixel au moyen d'un transistor supplémentaire comme par exemple décrit dans la demande de brevet n° WO2009/043887.

Le conducteur de colonne Col de sortie n'a alors plus le rôle de véhiculer le courant de polarisation de l'étage suiveur. Il n'est utilisé que comme dispositif d'observation de la tension de sortie du pixel. Il travaille à courant nul, en dehors des transitoires de courant nécessaires à chaque transition de ligne pour établir la nouvelle valeur de tension. A la fin de ces transitoires, le courant sur les conducteurs de colonnes étant nul, la tension est la même sur toute la longueur de ces colonnes, et en particulier la tension en extrémité de colonne représente bien, sans décalage, la tension du pixel. La résistance linéique R_pix n'entraine donc plus de chute de tension le long du conducteur colonne.

Cette solution a néanmoins le défaut, en introduisant un transistor source de courant dans chaque pixel, de nécessiter les tensions de commande correspondantes sur la grille et la source de ce transistor.

La distribution de la tension de grille sur une matrice se fait sans chute ohmique, puisqu'il n'y a pas de consommation correspondante. Mais la distribution de la tension de source subit des chutes ohmiques puisque celle-ci doit générer le courant de polarisation du transistor suiveur T2.

La tension de source du transistor supplémentaire varie d'un pixel au suivant en fonction de la résistance linéique du conducteur véhiculant cette tension. La différence de potentiel entre grille et source définit la valeur du courant que délivrent ces transistors pour polariser chaque transistor suiveur T2. Ces variations de courant de polarisation d'un pixel à l'autre créent donc, comme dans le pixel à trois transistors, des dispersions sur les signaux de sortie.

Il est possible de pallier cet inconvénient en maintenant constante, pour tous les pixels, la différence de potentiel entre source et drain du transistor supplémentaire. A cet effet, une chute de tension égale à celle qui existe sur les sources des transistors sources de courant est créée sur leurs grilles, en les connectant à un barreau résistif latéral qui reproduit la même chute de tension que celle qui existe sur les sources des transistors supplémentaires comme décrit dans la demande de brevet FR 2 921 788. Le barreau résistif est relié à toutes les grilles des transistors supplémentaires d'une colonne et est alimenté entre deux tensions, haute et basse, aux extrémités du barreau.

Cette solution fonctionne bien, mais est assez complexe à mettre en place et à piloter, car elle requiert deux tensions, haute et basse (Vg1, Vg2) de polarisation du barreau résistif latéral.

Une autre solution pour contourner le problème de la chute ohmique a par exemple été proposée dans la demande de brevet EP 1 416 722 A1. Cette solution consiste à déplacer la source de courant sur le bord opposé de la matrice, par rapport au bord sur lequel se trouvent les circuits de lecture S.

Le courant de polarisation du pixel va du pixel sélectionné jusqu'à la source de courant, et crée donc une chute ohmique dans la partie du conducteur colonne au-dessus du pixel sélectionné. Mais la partie inférieure, connectée au circuit de lecture S, n'est parcourue par aucun courant, et ne subit donc pas de chute ohmique. L'extrémité inférieure du pixel représente donc bien la tension du pixel.

Toutefois cette solution présente plusieurs les limitations. Il faut avoir la place nécessaire pour réaliser la source en haut de la colonne. Et dans le cas où plusieurs matrices doivent être assemblées ou aboutées, par exemple par quatre, afin d'obtenir finalement à une surface sensible quatre fois plus grande, alors le haut de la colonne se situe à la limite de la zone d'aboutage que l'on souhaite la plus petite possible. Il n'est donc pas souhaitable de placer dans cette zone d'aboutage des composants n'appartenant pas aux pixels proprement dit. Ceci éloignerait les parties sensibles des matrices élémentaires créant ainsi une ligne morte dans l'image finale au nouveau de l'aboutage.

De plus, il est nécessaire que la chute de tension entre le pixel adressé et la source de courant ne soit pas trop forte, de façon que le transistor source de courant reste en mode saturé, et remplisse bien sa fonction de source de courant. Et comme décrit précédemment, si on augmente la largeur de la colonne pour réduire cette chute de tension, cela augmentera la consommation.

L'invention a pour but de résoudre le problème des chutes ohmiques sur le chemin de sortie de l'information issue du pixel, sans ajout de composant en haut des colonnes, et sans nécessiter d'échelle de polarisation pour les grilles des transistors sources de courant.

A cet effet, l'invention a pour objet un dispositif d'imagerie comprenant une matrice de pixels, au moins un conducteur de données pouvant être connecté à plusieurs pixels de la matrice, organisés en rangée et permettant d'acheminer successivement des signaux délivrés par respectivement chacun des pixels de la rangée et un générateur de courant électronique alimentant plusieurs pixels, chacun des pixels de la matrice comprenant :

- un transistor délivrant à l'une de ses bornes, dite noeud du pixel, le signal délivré par le pixel considéré et dans lequel peut circuler un courant issu du générateur de courant,
- et un premier interrupteur électronique permettant de connecter le noeud du pixel au conducteur de donnée associé à ce pixel en fonction d'un signal de sélection du pixel,

caractérisé en ce que chacun des pixels de la matrice comprend en outre un second interrupteur électronique, distinct du premier interrupteur électronique, raccordé au noeud du pixel et permettant de faire circuler dans le transistor le courant issu du générateur en fonction du signal de sélection du pixel, le dispositif comprenant en outre au moins un conducteur d'alimentation en courant (Col_a) raccordé à tous les pixels utilisant le même générateur de courant (T4) et en ce que le conducteur d'alimentation en courant (Col_a) est distinct du conducteur de donnée (Col_b).

Les signaux délivrés, acheminés par les différents conducteurs de données, sont lus chacun par un circuit de lecture S disposé en extrémité d'un conducteur de données et formé par un circuit de lecture de tension à haute impédance d'entrée.

L'invention s'applique à tout schéma de pixel dans lequel le noeud de sortie du pixel doit être connecté à la fois à une source de courant et à un amplificateur suiveur disposé en extrémité de colonne.

L'amplificateur suiveur peut être simplement un suiveur de tension.

L'invention sera mieux comprise et d'autres avantages apparaîtront à la lecture de la description détaillée d'un mode de réalisation donné à titre d'exemple, description illustrée par le dessin joint dans lequel :

la figure 1 représente une matrice de pixels telle que réalisée dans l'art antérieur et décrite précédemment ;
les figures 2 et 3 représentent schématiquement deux variantes d'un dispositif d'imagerie selon un premier mode de réalisation de l'invention ;
la figure 4 représente un second mode de réalisation d'un dispositif d'imagerie selon l'invention.

Pour ne pas alourdir la description des deux modes de réalisation de l'invention, les matrices représentées ne comprennent que quatre pixels. Il est bien entendu que les matrices réelles sont généralement beaucoup plus grandes. De plus, les mêmes éléments porteront les mêmes repères dans les différentes figures.

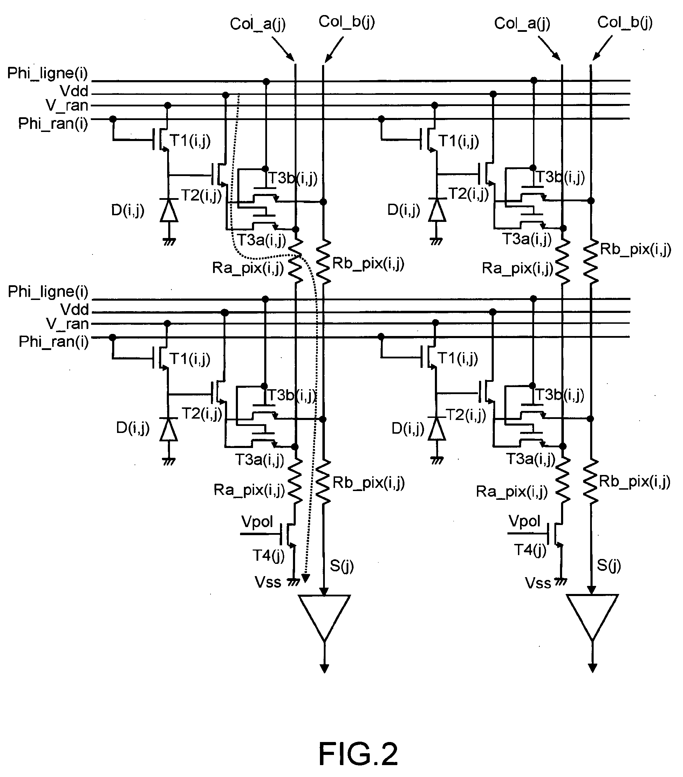

La figure 2 représente un dispositif d'imagerie comprenant une matrice de deux lignes et deux colonnes. Quatre pixels sont formés, chacun à l'intersection d'une ligne et d'une colonne. Les repères des différents composants électroniques, propres à chaque pixel, sont suivis de deux coordonnées (i,j) pouvant prendre le rang de la ligne pour i et le rang de la colonne pour j. Certains composants du dispositif ne comportent qu'une seule coordonnée j. Ces composants sont communs à une colonne de pixels.

Chaque pixel comprend une zone photosensible représenté ici par une photodiode D dont l'anode est reliée à une masse du dispositif. Il est possible de mettre en oeuvre d'autres types composants photosensibles comme par exemple un phototransistor ou une photorésistance. Durant une phase de prise d'image et sous l'effet d'un éclairement, le composant photosensible accumule un courant de charge qui, dans l'exemple représenté, abaisse le potentiel de la cathode de la photodiode D.

Dans chaque pixel, un premier transistor T1 permet la réinitialisation de la tension de la cathode de la photodiode D à un potentiel V_ran porté par un conducteur de ligne de la matrice et appliqué au drain du transistor T1. La source du transistor T1 est reliée à la cathode de la photodiode D. Un signal de commande Phi_ran porté par un conducteur de ligne de la matrice est appliqué à la grille du transistor T1. Lors d'une phase de réinitialisation du dispositif, le signal de commande Phi_ran est actif et rend conducteur le transistor T1. Cette phase précède la phase de prise d'image.

Chaque pixel comprend un deuxième transistor T2 délivrant à sa source une tension égale à celle de la cathode de la photodiode D connectée à la grille du transistor T2. Le drain du transistor T2 est raccordé à un conducteur de ligne portant un potentiel de polarisation Vdd par exemple de l'ordre de 3,3V. Les potentiels V_ran et Vdd peuvent être identiques.

Chaque pixel comprend un interrupteur électronique formé par un troisième transistor T3b permettant de connecter la source du transistor T2 à un conducteur de données Col_b associé à une rangée de pixels et dans l'exemple de la figure 2, une colonne de pixels. Le conducteur de donnée Col_b est parfois appelé bus de données. Le drain du transistor T3b est raccordé à la source du transistor T2 et la source du transistor T3b est raccordée au conducteur de données Col_b. L'interrupteur électronique est actionné au moyen d'un signal de sélection Phi_ligne porté par un conducteur de ligne de la matrice. Ce conducteur est raccordé à la grille du transistor T3b.

Le dispositif comprend plusieurs conducteurs de données Col_b prévus pour acheminer respectivement le signal délivré par plusieurs pixels auxquels ils sont reliés par l'intermédiaire de transistors T3b, propre à chaque pixel, et qui a été sélectionné à l'aide du signal de sélection Phi_ligne. Le transistor T2 est prévu pour recopier le potentiel de la cathode de la photodiode D et le reproduire, à un décalage de tension près, vers le conducteur de données Col_b considéré. Le potentiel de la cathode de la photodiode D est ensuite lu par un circuit de lecture S situé en extrémité du conducteur de données Col_b.

Pour réaliser sa recopie, le transistor T2 nécessite un courant de polarisation circulant de son drain à sa source. Ce courant est imposé par un générateur de courant formé par un transistor T4 commun à plusieurs pixels. Dans l'exemple représenté, le transistor T4 est commun à une colonne de pixels.

Selon l'invention, chacun des pixels de la matrice comprend en outre un second interrupteur électronique distinct du premier interrupteur électronique, raccordé à la sortie de l'amplificateur suiveur, formé par la source du transistor T2, et permettant de faire circuler le courant issu du transistor T4. Le second interrupteur électronique est formé par un transistor T3a dont le drain est raccordé à la source du transistor T2 et dont la source est raccordée à un conducteur d'alimentation en courant Col_a, en extrémité de laquelle se trouve le transistor T4. Ici également, le conducteur d'alimentation Col_a est parfois appelé bus d'alimentation. Le conducteur d'alimentation en courant Col_a est relié à tous les pixels d'une même colonne. Les grilles des transistors T3a et T3b sont raccordées ensemble de sorte que le signal de sélection Phi_ligne commande l'ouverture et la fermeture des deux transistors T3a et T3b.

La matrice de pixels est réalisée sur un substrat. Le circuit de lecture S et le générateur de courant T4 sont disposés sur le substrat au voisinage d'un même bord du substrat.

Le transistor T4, commun à une colonne de pixels est ici un transistor à canal N. Son drain est relié au conducteur d'alimentation en courant Col_a, sa source est reliée à la masse du dispositif et sa grille à la tension Vpol. Le transistor T4 est polarisé en source de courant.

Le conducteur d'alimentation en courant Col_a est distinct du conducteur de donnée Col_b pour une même colonne. Sur chacun des conducteur Col_a et Col_b, on a représenté des résistances, respectivement Ra_pix et Rb_pix, au niveau de chaque pixel. Ces résistances représentent une résistance linéique répartie du conducteur formant le conducteur considéré.

Lors d'une phase de lecture du pixel, phase suivant la phase de prise d'image, on souhaite recevoir en entrée du circuit de lecture S une image du potentiel de la cathode de la photodiode D, à un décalage de tension près.

Lors d'une phase de lecture de la matrice, les différentes lignes de la matrice sont sélectionnées successivement. Lorsqu'une ligne est sélectionnée, les transistors T2, T3a, T3b et T4 correspondant situé en extrémité de colonne sont activés de telle sorte qu'un courant de polarisation du transistor T2, représenté en pointillée sur la figure 2 pour le pixel de coordonnées (1,1) situé en haut et à gauche de la figure 2, circule dans les transistors T2, T3a et T4.

Une chute de tension due à la résistance linéique Ra_pix se produit le long du conducteur d'alimentation en courant Col_a. Sur ce conducteur, le potentiel lu par le transistor T2 subit donc une chute ohmique, dépendante de la hauteur du pixel dans la matrice à mesure que l'on s'éloigne du pixel sélectionné.

Par contre, l'interrupteur T3b, le conducteur de données Col_b et le circuit de lecture S constituent un dispositif de lecture de la tension de sortie du pixel qui fonctionne sans courant sur le conducteur de données Col_b et mesure donc la tension de sortie du pixel sans biais.

La mise en place d'un double interrupteur de sortie T3a et T3b du pixel, et de deux conducteurs Col_a et Col_b permet donc de s'affranchir des chutes ohmiques sur le chemin qui va du pixel au circuit de lecture S situé en extrémité de conducteur auquel est raccordé le pixel considéré.

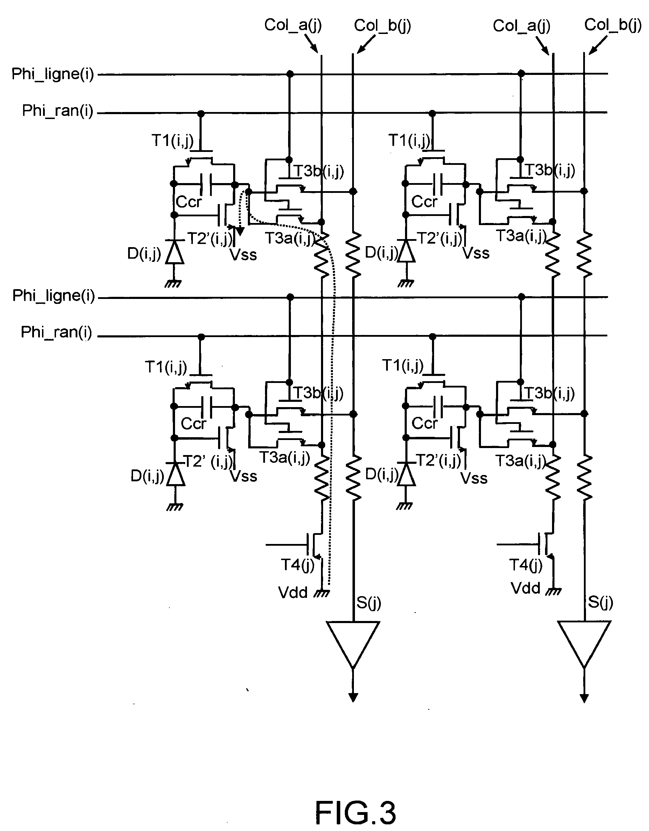

La figure 3 représente une variante du dispositif d'imagerie de la figure 2 comprenant une matrice de deux lignes et deux colonnes. Comme sur la figure 1, on retrouve dans chaque pixel de la figure 2 une photodiode D formant l'élément photosensible, le transistor T1 permettant la réinitialisation de la tension de la cathode de la photodiode D ainsi que les deux interrupteurs de sortie T3a et T3b du pixel assurant la connexion de ce dernier aux deux conducteurs, respectivement Col_a et Col_b. Dans cette variante, un transistor T2', remplaçant le transistor T2, permet d'amplifier la tension présente sur la cathode de la photodiode D. Ce type de pixel est appelé pixel-amplificateur et est bien connu dans la littérature anglo-saxonne sous le nom de pixel CTIA pour « Charge Trans Impedance Amplifier ».

Dans chacun des pixels, une capacité de contre-réaction Ccr est disposée entre la grille et le drain du transistor T2'. Les charges délivrées par la photodiode D, se positionnent sur la capacité de contre-réaction Ccr pendant la phase de lecture du pixel lorsque celui-ci est sélectionné. Le point commun des deux interrupteurs de sortie T3a et T3b (le drain des deux transistors T3a et T3b) est relié au drain de T2'. Ce point forme le noeud du pixel pouvant être connecté aux deux conducteurs Col_a et Col_b lorsque les interrupteurs T3a et T3b sont fermés sous l'action du signal de sélection Phi_ligne. La source du transistor T2' est reliée à la tension Vss, généralement la masse du dispositif. Le transistor T1, permet, lors de la réinitialisation du pixel, de court-circuiter la capacité de contre-réaction Ccr. Le drain des transistors T1 et T2' sont reliés et la source du transistor T1 est reliée à la cathode de la photodiode D. Le transistor T1 est commandé par le signal de commande Phi_ran appliqué à sa grille.

Le transistor T4, commun à une colonne de pixels, est ici un transistor à canal P. Son drain est relié au conducteur d'alimentation en courant Col_a, sa source est relié à la source de tension Vdd et sa grille à la tension Vpol.

Le courant de polarisation du transistor T2 est représenté en pointillée sur la figure 3 pour le pixel de coordonnées (1,1) situé en haut et à gauche de la figure 3, circule dans les transistors T2, T3a et T4. Comme dans la variante de la figure 2, ce courant circule dans le conducteur d'alimentation en courant Col_a et pas dans le conducteur de données Col_b.

La fonction générateur de courant, réalisée dans les schémas des figures 2 et 3 par le transistor T4, peut aussi être réalisée par des schémas beaucoup plus complexes.

Il est aussi possible de n'utiliser qu'un seul transistor source de courant T4, pour toute la matrice, à condition de le commuter successivement sur les colonnes, au fur et à mesure de la lecture de ces mêmes colonnes.

La solution représentée sur les figures 2 et 3 présente néanmoins une limitation, car il est nécessaire de réduire la chute ohmique sur les différents conducteurs d'alimentation en courant Col_a, pour éviter que les transistors T4 ne se dé-saturent, et perdent alors leur fonction de source de courant. Cette réduction de chute ohmique se fait en réduisant la résistance linéique Ra_pix au moyen d'une augmentation de la largeur de des pistes conductrices formant ce conducteur ce qui augmente les capacités parasites liées au conducteur d'alimentation en courant Col_a.

Or, lorsque l'adressage passe d'une ligne à la suivante, il est possible que la tension de sortie du nouveau pixel connecté sur une colonne soit très différente de celle du pixel précédent. Il faut alors charger les deux conducteurs Col_a et Col_b à la nouvelle valeur de tension. Et pour que cela soit rapide, cela impose que le générateur de courant T4 soit puissant, ce qui crée de la consommation en courant, et qui de plus crée aussi de la chute ohmique dans les différents conducteurs d'alimentation en courant Col_a, alors que c'est ce que l'on voulait éviter.

Lors de la phase de lecture, les capacités parasites du conducteur d'alimentation en courant Col_a obligent également à ralentir la vitesse de passage d'une ligne à l'autre de la matrice, ce augmente le temps de lecture de la matrice.

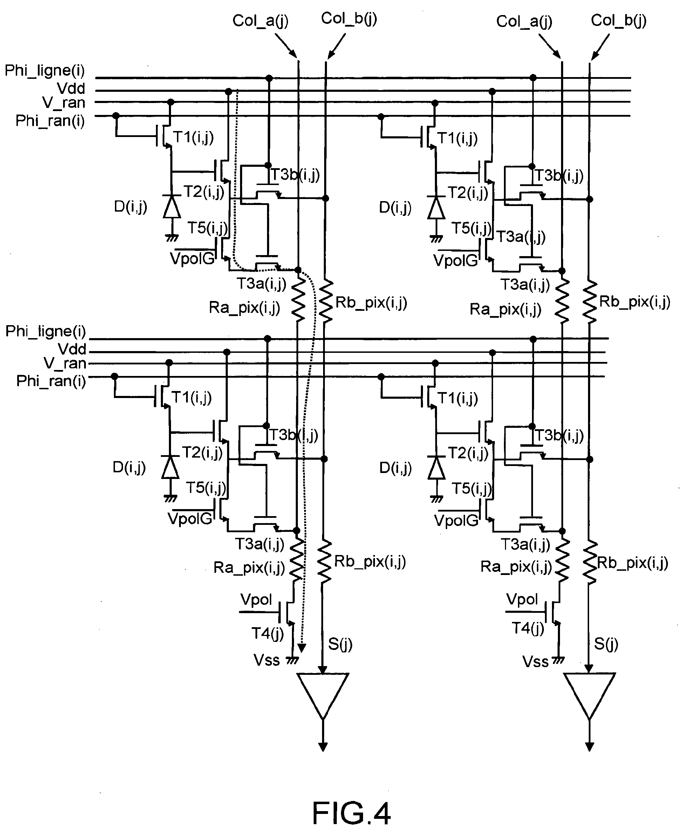

Le mode de réalisation de la figure 4 permet de résoudre ce problème.

Par rapport au schéma de la figure 2, dans chaque pixel, on intercale entre la source du transistor T2 et l'interrupteur T3a, un nouveau transistor T5. Son drain est relié à la source du transistor T2 et sa source est reliée au drain du transistor T3a.

Les grilles des transistors T5 des différents pixels sont connectées ensemble à une même tension VpolG. Cette tension ne débitant pas de courant, peut donc être indifféremment routée avec des conducteurs ligne, des conducteurs colonne, ou en grille. Ce routage n'est pas représenté sur la figure 4.

La tension VpolG est choisie de façon que les transistors T5 soient polarisés en grille commune. Plus précisément, le transistor T5 fonctionne en mode saturé. Il fait transiter le flux d'électrons, émis par le générateur de courant T4, vers le transistor T2. Il fixe le potentiel de sa source, et donc du conducteur d'alimentation en courant Col_a, en fonction de ses dimensions sur le substrat portant la matrice et en fonction du flux d'électrons émis par le transistor T4.

La tension VpolG ne doit pas être trop faible, de façon que le potentiel du drain du transistor T4 qui s'en déduit reste suffisant pour que le transistor T4 reste donc en mode saturé et remplisse ainsi sa fonction de générateur de courant.

Le transistor T5 assure donc l'indépendance, dans une certaine plage de tensions, de sa tension source par rapport à sa tension drain du fait de son état saturé. Son potentiel de drain, c'est-à-dire le potentiel de la source du transistor T2, et donc la potentiel du conducteur de données Col_b, devient donc indépendant du potentiel du conducteur d'alimentation en courant Col_a. Le transistor T5, vu du noeud de sortie du pixel, c'est-à-dire la source du transistor T2, se comporte comme une source de courant. Il déporte en local, au niveau de chaque pixel, la fonction de générateur de courant assuré par le transistor T4.

Le potentiel du conducteur d'alimentation en courant Col_a ne dépend pas de la tension de la cathode de la photodiode D du pixel lu. Le potentiel du conducteur d'alimentation en courant Col_a dépend la hauteur du pixel lu dans la matrice, par l'intermédiaire de la résistance linéique du conducteur formant le conducteur d'alimentation en courant Col_a : « n x Ra_pix ». Mais cette variation est faible lorsque l'on passe d'une ligne à la suivante contrairement au premier mode de réalisation représenté sur les figures 2 et 3 où cette variation dépendait du potentiel de la cathode de la photodiode D du pixel lu. Dans le mode de réalisation de la figure 4, la quantité de charges à apporter sur le conducteur d'alimentation en courant Col_a lors du passage d'une ligne à la suivante est donc faible. On peut donc dessiner une piste large, qui réduira la chute ohmique sans que l'effet capacitif dû à cette large piste ne détériore la vitesse de lecture de la matrice.

Moyennant ce transistor T5, et son état de polarisation, on obtient donc, lorsque l'adressage de la matrice passe d'une ligne à la suivante, un potentiel quasiment identique sur le conducteur d'alimentation en courant Col_a, quelles que soient les informations des deux pixels successifs lus sur une même colonne. C'est-à-dire ce qui était recherché.

Il est bien entendu possible de mettre en oeuvre des moyens pour rendre indépendant le potentiel du noeud du pixel de la position du pixel le long du conducteur d'alimentation en courant (Col_a), réalisés au moyen du transistor T5, dans la variante représentée sur la figure 3.

**Revendications**

1. Dispositif d'imagerie comprenant une matrice de pixels, au moins un conducteur de données (Col_b) pouvant être connecté à plusieurs pixels de la matrice, organisés en rangée et permettant d'acheminer successivement des signaux délivrés par respectivement chacun des pixels de la rangée et un générateur de courant électronique (T4) alimentant plusieurs pixels, chacun des pixels de la matrice comprenant :

   • un transistor (T2) délivrant à l'une de ses bornes, dite noeud du pixel, le signal délivré par le pixel considéré et dans lequel peut circuler un courant de polarisation issu du générateur de courant (T4),
   • et un premier interrupteur électronique (T3b) permettant de connecter le noeud du pixel au conducteur de donnée (Col_b) associé à ce pixel en fonction d'un signal de sélection (Phi_ligne) du pixel,

   **caractérisé en ce que** chacun des pixels de la matrice comprend en outre un second interrupteur électronique (T3a), distinct du premier interrupteur électronique (T3b), raccordé au noeud du pixel et permettant de faire circuler dans le transistor le courant issu du générateur (T4) en fonction du signal de sélection (Phi_ligne) du pixel, le dispositif comprenant en outre au moins un conducteur d'alimentation en courant (Col_a) raccordé à tous les pixels utilisant le même générateur de courant (T4) et **en ce que** le conducteur d'alimentation en courant (Col_a) est distinct du conducteur de donnée (Col_b).

2. Dispositif selon la revendication 1, **caractérisé en ce que** chaque pixel comprend un transistor (T5) dont la liaison drain source est disposée entre le noeud du pixel et le second interrupteur électronique (T3a), le transistor (T5) fonctionnant dans un état saturé permettant de rendre indépendant le potentiel du noeud du pixel de la position du pixel le long du conducteur d'alimentation en courant (Col_a).

3. Dispositif selon l'une des revendications précédentes, **caractérisé en ce que** le générateur de courant électronique (T4) est commun à tous les pixels d'une rangée.

4. Dispositif selon l'une des revendications précédentes, **caractérisé en ce que** la matrice de pixels est réalisée sur un substrat, **en ce que** le conducteur de données (Col_b) est raccordé à un circuit de lecture (S) de la rangée de pixels et **en ce que** le circuit de lecture (S) et le générateur de courant (T4) sont disposés sur le substrat au voisinage d'un même bord du substrat.

**Patentansprüche**

1. Bildgebungsvorrichtung, die Folgendes umfasst: eine Matrix von Pixeln, wenigstens einen Datenleiter (Col_b), der mit mehreren Pixeln der Matrix verbunden werden kann, die reihenweise organisiert sind und das sukzessive Leiten der jeweils von jedem der Pixel der Reihe geliefert Signale zulassen, und einen elektronischen Stromgenerator (T4), der mehrere Pixel zuführt, wobei jedes der Pixel der Matrix Folgendes umfasst:

   • einen Transistor (T2), der das von dem betrachteten Pixel gelieferte Signal zu einem seiner Anschlüsse liefert, Pixelknoten genannt, und durch den ein von dem Stromgenerator (T4) kommender Vorspannungsstrom zirkulieren kann; und
   • einen ersten elektronischen Schalter (T3b), der es zulässt, den Pixelknoten mit dem mit diesem Pixel assoziierten Datenleiter (Col_b) in Abhängigkeit von einem Signal (Phi_ligne) zum Wählen des Pixels zu verbinden,

   **dadurch gekennzeichnet, dass** jedes der Pixel der Matrix ferner einen zweiten elektronischen Schalter (T3a) umfasst, separat von dem ersten elektronischen Schalter (T3b), der an den Pixelknoten angeschlossen ist und es zulässt, dass der von dem Generator (T4) kommende Strom in dem Transistor in Abhängigkeit von dem Signal (Phi_ligne) zum Auswählen des Pixels zirkuliert,
   wobei die Vorrichtung ferner wenigstens einen Stromzuführungsleiter (Col_a) umfasst, der an alle Pixel angeschlossen ist, die denselben Stromgenerator (T4) benutzen, und dadurch, dass der Stromzuführungsleiter (Col_a) separat von dem Datenleiter (Col_b) ist.

2. Vorrichtung nach Anspruch 1, **dadurch gekennzeichnet, dass** jedes Pixel einen Transistor (T5) umfasst, dessen Drain-Source-Verbindung zwischen dem Pixelknoten und dem zweiten elektronischen Schalter (T3a) angeordnet ist, wobei der Transistor (T5) in einem gesättigten Zustand arbeitet, der es zulässt, das Potential des Pixelknotens von der Position des Pixels entlang dem Stromzuführungsleiter (Col_a) unabhängig zu machen.

3. Vorrichtung nach einem der vorherigen Ansprüche, **dadurch gekennzeichnet, dass** der elektronische Stromgenerator (T4) allen Pixeln einer Reihe gemeinsam ist.

4. Vorrichtung nach einem der vorherigen Ansprüche, **dadurch gekennzeichnet, dass** die Pixelmatrix auf einem Substrat realisiert wird, dadurch, dass der Datenleiter (Col_b) an eine Leseschaltung (S) der Reihe von Pixeln angeschlossen ist, und dadurch, dass die Leseschaltung (S) und der Stromgenerator (T4) auf dem Substrat in der Nähe eines selben Randes des Substrats angeordnet sind.

**Claims**

1. An imaging device comprising a matrix of pixels, at least one data conductor (Col_b) that can be connected to a plurality of pixels of said matrix, which pixels are organised in rows and allow the successive routing of the signals respectively delivered by each of the pixels of the row, and an electronic current generator (T4) feeding a plurality of pixels, with each of the pixels of said matrix comprising:

   • a transistor (T2), which delivers the signal delivered by the considered pixel to one of its terminals, called pixel node, and through which a bias current can circulate that originates from said current generator (T4); and
   • a first electronic switch (T3b) that allows said pixel node to be connected to the data conductor (Col_b) associated with said pixel as a function of a signal (Phi_ligne) for selecting said pixel,

   **characterised in that** each of the pixels of said matrix further comprises a second electronic switch (T3a), which is distinct from said first electronic switch (T3b), that is connected to said pixel node and allows the current originating from said generator (T4) to circulate through said transistor as a function of said signal (Phi_ligne) for selecting said pixel,
   said device further comprising at least one current feed conductor (Col_a) that is connected to all of the pixels that use the same current generator (T4), and **in that** said current feed conductor (Col_a) is distinct from said data conductor (Col_b).

2. The device according to claim 1, **characterised in that** each pixel comprises a transistor (T5), the drain-source connection of which is disposed between said pixel node and said second electronic switch (T3a), said transistor (T5) operating in a saturated state that allows the potential of said pixel node to be rendered independent of the position of said pixel along said current feed conductor (Col_a).

3. The device according to any one of the preceding claims, **characterised in that** said electronic current generator (T4) is common to all of the pixels of a row.

4. The device according to any one of the preceding claims, **characterised in that** said pixel matrix is produced on a substrate, **in that** said data conductor (Col_b) is connected to a reading circuit (S) of the row of pixels and **in that** said reading circuit (S) and said current generator (T4) are disposed on said substrate in the vicinity of the same edge of said substrate.

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009043887 A
- FR 2921788
- EP 1416722 A1